# EUROPEAN PATENT APPLICATION

(11) **EP 0 711 809 A1**
(43) Date of publication of application: **15.05.1996**
(21) Application number: 95117241.0
(22) Date of filing: 02.11.1995
(51) Int. Cl.: C08L 53/02, A43B 13/00

(54) **Thermoplastic composition having high abrasion resistance**

(30) Priority: 10.11.1994 IT MI942275
(71) Applicant: TECNOFILM S.p.A., I-60044 Fabriano (AN) (IT)
(72) Inventor: Balducci, Sandro, Porto San Giorgio, Ascoli Piceno (IT); Ricci, Ivan, Fermo, Ascoli Piceno (IT)
(74) Representative: Sama, Daniele, Dr.

(57) **Abstract**

Thermoplastic composition suitable for forming by molding molded articles having glossy or rubber-like dull surface, and very good characteristics of abrasion resistance, comprising a vinyl aromatic monomer-conjugate diene linear block elastomeric copolymer, an alkenyl polymer derived from monomer units having from 4 to 16 C and having a content of trans bonds higher than 50%, and optionally a hydrocarbon extender oil.

## Description

The present invention relates to thermoplastic compositions based on elastomeric thermoplastic rubbers, suitable to be molded by injection or compression into molded articles having high characteristics of abrasion resistance.

More particularly, the present invention refers to thermoplastic compositions based on vinylaromatic monomer conjugated diene linear block elastomeric copolymers, capable to produce molded articles having high characteristics of abrasion resistance.

Thermoplastic compositions based on elastomeric rubbers and in particular on vinyl aromatic monomer-conjugated diene linear block elastomeric copolymers are well known in the art and are broadly used in the manufacture of a great variety of molded articles having rubber-like smooth and dull appearance such as, for instance, shoes, toys, household objects, etc.

In the most part, these compositions based on block elastomeric copolymers have proven to have particularly advantageous properties compared with the compositions based on thermoplastic polyurethane since they do not need drastic molding conditions and have not to be submitted to pre-treatments to remove the absorbed moisture. Notwithstanding these advantageous properties, however, both linear and radial block copolymers have an high abrasion limiting their use in the fields wherein this property is particularly necessary, such as for instance heels or soles for shoes with high performances.

Thermoplastic compositions based on block elastomeric copolymers suitable for producing molded articles having an appearance very similar to that of a rubber article are known from USA Patent Nos. 4,216,132 and 4,520,138. However, these compositions have very poor resistance to abrasion and milling with abrasive paper.

Object of the present invention is to improve the abrasion resistance properties of thermoplastic compositions based on vinyl aromatic monomer-conjugated diene block elastomeric copolymers.

More particularly, object of the present invention is to provide a thermoplastic composition based on a vinyl aromatic monomer-conjugated diene block elastomeric copolymer suitable for producing molded articles having an abrasion resistance comparable with that of the corresponding molded articles based on thermoplastic polyurethane.

According to the present invention, these and other objects resulting from the following description are achieved by adding an alkenyl polymer containing trans bonds higher than 50% with respect to the total of unsaturated bonds to a linear block elastomeric copolymer.

The resulting compositions can additionally contain small amounts of a radial block elastomeric polymer, inorganic fillers, extender hydrocarbon oils and various conventional additives such as antioxidants, stabilizers, releasing agents, foaming agents, opacifiers, etc.

Subject matter of the present invention is, therefore, a thermoplastic composition suitable for forming both by injection and by compression molding molded articles having a glossy or rubber-like dull surface and very good characteristics of abrasion resistance, comprising:
(A) 100 parts by weight of a vinyl aromatic monomer-conjugated diene linear block elastomeric copolymer alone or in admixture with a vinyl aromatic monomer-conjugated diene radial block elastomeric polymer;
(B) from 1 to 50 parts by weight of an alkenyl polymer deriving from monomeric units having from 4 to 16 carbon atoms and having a content of trans bonds higher than 50% with respect to the total of unsaturated bonds;
(C) from 0 to 70 parts by weight of an extender hydrocarbon oil, and
(D) from 0 to 100 parts by weight of a finely subdivided filler.

The vinyl aromatic monomer-conjugated diene linear block copolymers, used as component (A) in the composition of the present invention, are of SBS type wherein S are non elastomeric polymer blocks of a vinyl aromatic monomer and B are elastomeric polymer blocks based on a conjugated diene.

Typical linear block copolymers are those having the polystyrene-polybutadiene-polystyrene structure.

The non-elastomeric polymeric blocks S, which represent from 10 to 85% by weight of the finished block copolymer, have a number average molecular weight between 5,000 and 250,000, preferably between about 8,000 and about 75,000. The elastomeric polymeric blocks B have a number average molecular weight between 2,000 and 350,000, preferably between 5,000 and 250,000.

The linear block copolymers used in the compositions of the present invention have the characteristic of being essentially free from uncoupled blocks, generally known as di-blocks or SB, wherein S and B have the meaning reported above.

The linear block copolymers can be prepared according to techniques well known to ones skilled in the art, such as for instance by first forming a vinyl aromatic polymer block, by anionic polymerization, in an inert solvent and in the presence of an organo-metallic catalyst based on lithium (initiator), forming then the conjugated diene block polymer by addition of such monomer and successively forming another vinyl aromatic polymer block by adding vinyl aromatic monomer.

The linear block copolymes are well known in the art and described, for instance, in US Patent No. 3,265,765. Further details on the physical and structural characteristics of these copolymers are reported in B.C. ALLPORT et al "Block Copolymers" Applied Science Publishers Ltd. 1973.

The linear block copolymers are available on the market, such as for instance, with the trademark "CARIFLEX^{(R)} TR 1102 S" produced and sold by SHELL, with the trademark "FINAPRENE^{R} 315" produced and sold by Fina, or with the trademark "VECTOR^{R}" produced and sold by Dexco.

The vinylaromatic monomer-conjugated diene radial block copolymers which, optionally, can be used in admixture with the linear block copolymers in amounts comprised from 0 to 30 parts by weight for 100 parts by weight of the linear block copolymer, have general formula (S-B)ₓ - BS wherein S and B are polymeric blocks of the above mentioned type and x is an integer higher than 1, preferably ranging from more than 1 to 15 and still more preferably from 2 to 6.

In these radial block copolymers, the non-elastomeric polymeric blocks S are comprised between 8 and 90% of the total weight of the copolymer and have a number average molecular weight from 5,000 to 250,000. The elastomeric polymeric blocks B have a number average molecular weight ranging from 5,000 to 75,000.

The vinyl aromatic monomer particularly suitable for preparing both linear and radial block copolymers is styrene; alkyl-substituted styrenes, which have the same copolymerization characteristics, such as for instance methyl-styrene, ethyl-styrene, t.butyl-styrene, etc, can be also used.

The conjugated dienes useful for preparing both linear and radial block copolymers are those having from 4 to 8 carbon atoms in the molecule, as for instance 1,3-butadiene, isoprene, 2,3-dimethyl-1,3-butadiene, piperylene and mixtures thereof; 1,3-butadiene is particularly preferred.

The alkenyl polymer (B) is of the type:

-(CR₁R₂)ₘ - C = C - (CR₃R₄)ₙ-

wherein m and n are integers from 1 to 8 and each R₁, R₂, R₃ and R₄, independently from each other, can be hydrogen or an alkyl radical containing from 1 to 3 carbon atoms.

Preferred alkenyl polymers (B) are polyheptylene, polyoctenylene and polynonenylene.

The alkenyl polymers (B) used in the composition of the present invention have a content in trans double bonds higher than 50%, preferably at least 60% and more preferably comprised between 75 and 100% with respect to the total of the unsaturated bonds, and a crystallinity higher than 15%, preferably higher than 30% by weight.

The preferred alkenyl polymer is the polyoctenylene having a content in trans double bonds of about 78-83%, a crystallinity of about 33%, a Melt Flow Index (M.F.I.) ranging from 5 to 60, determined according to standard DIN 53735 at 190°C, with a 5 kg load, per 10 min., and a melting point of 53-55°C. Polyoctenylene is obtained by metathesis polymerization of cyclooctene, and cyclooctene in its turn by synthesis from 1,3-butadiene through 1,5-cyclooctadiene.

The obtained product is characterized by an high content of macrocycles combined with a high molecular weight distribution.

The content of the trans double bonds in polyoctenylenes and the crystallinity degree can be regulated by appropriate setting the polymerization conditions.

Polyoctenylenes are well known in the art and available on the market for instance with the trademarks VESTENAMER^{R} 8012, having a content in trans bonds of about 80% and a melting point of 54°C, or VESTENAMER^{R} 6213 having a content of trans bonds of about 60% and a melting point of about 30°C, both manufactured and sold by Huels Akt.

The amount of alkenyl polymers used in the composition of the present invention ranges from 1 to 50, preferably from 2 to 30 parts by weight with respect to 100 parts of the block copolymer (A).

Hydrocarbon extender oils, generally known as paraffinic and/or naphthenic oils, are usually fractions of products deriving from petroleum refining having less than about 30% by weight of aromatics, measured by clay-gel analysis, and have usually a viscosity comprised between about 100 and about 500 SSU at 37.8°C (100°F). These hydrocarbon extender oils are commercially known, for instance with the trademark SHELLFLEX^{R} 310, 371 and 311, produced and sold by Shell.

The amount of extender oils used in the composition of the present invention can range from 0 to 70, preferably from 5 to 30, parts by weight with respect to 100 part by weight of the block copolymer (A).

The compositions of the present invention can optionally contain a finely subdivided filler, especially when a transgloss is undesired.

The fillers which can be added to the compositions of the present invention are well known in the art and comprise clay, talc, silica, alumina, titanium dioxide, carbon blacks, calcium carbonate, sawdust and other pigments. The preferred fillers comprise silica, calcium carbonate and mixtures thereof. The particle sizes may vary from 1 to 50 micrometers.

The amount of filler employed can range from 0 to 100, preferably from 5 to 50, parts by weight with respect to 100 parts by weight of the block copolymer (A).

In addidition to the above mentioned components (A), (B) and (C), some other types of ingredients can be added to the compositions of the present invention. Such other ingredients comprise reinforcing fillers, such as for intance glass fibers, polyester fibers, high modulus acrylic fibers, carbon fibers, etc.; flame-proof agents; dyes; pigments; stabilizers; lubricants, such as butyl stearate, mineral oil, paraffin waxes, etc.; flow agents, opacizers, such as for intance 1,2-polybutadiene, syndiotactic 1,2-polybutadiene etc., as well known to the skilled in the field.

Suitable stabilizers comprise many of the known polymer stabilizers against oxidation and thermal degradation, such as for instance, phosphates, liquid phosphites and hindered phenols, in amounts which may vary from 0.5 to 5% by weight, with respect to the total composition.

The compositions of the present invention can be prepared with any conventional mixing procedure. For instance, the mixing can be made at the molten state and time and temperature are selected and determined depending on the composition. Temperatures are generally comprised from 150 to 200°C.

Any continuous or discontinuous mixing unit can be used. Specifically, mono or two-screw extruders, Banbury internal mixers, mixing rolls and the like can be used.

The components of the composition can be separately added to the mixing unit at the beginning or during the composition preparation. In some cases it is preferable to premix some components before being fed to the mixing unit.

The compositions of the present invention are easily processable by injection or by extrusion molding and show a whole of properties rendering them suitable for being used in the manufacture of shoe articles, as for instance shoe soles, toys, household articles, etc.

The advantages of the compositions of the present invention mainly reside in their high abrasion resistance which make the compositions of the present invention particularly suitable for underheels, soles for sports shoes having high performances, such as for instance tracking, football, cycling shoes, etc.

In order to better understand the present invention and to carry out the same, some illustrative examples are hereinafter reported which are given for the purpose of illustration alone and are not meant to limit the invention.

### EXAMPLES 1-7

In a Banbury type mixer there were mixed:
(A) a polystyrene-polybutadiene-polystyrene (S-B-S) linear block elastomeric copolymer having a molecular weight of 60,000 and a content in polystyrene of 43% by weight, the molecular weights of the blocks being 13,000-34,000-13,000, in amounts reported in Table 1 below;
(B) polyoctenylene having a content in trans double bonds of about 78-83%, a crystallinity of about 33%, a M.F.I. of about 20 (measured according to DIN 53735 at 190°C, 5 kg and 10 min) and a melting point of 53-55°C, in amounts reported in Table 1 below;
(C) naphthenic extender mineral oil in the amounts reported in Table 1 below.

The compositions were extruded at 170°C and the strings outgoing from the die were cut in pellets by overhead cutting.

The characteristics of the extruded products are listed in the following Table 1.

### EXAMPLES 8-13

The operative modalities of Example 1 were repeated by replacing the copolymer (A) with another linear block elastomeric copolymer (A') having a molecular wight of 81,000, a content of styrene of 29% by weight and a molecular weight of each block S-B-S of 12,000-57,000-12,000.

The characteristics of the blends obtained are listed in the following Table 2.

**TABLE 1**

| COMPOSITION | | EXAMPLES | | | | | | |
|---|---|---|---|---|---|---|---|---|
| | | 1* | 2* | 3 | 4 | 5 | 6* | 7 |
| - LINEAR BLOCK COPOLYMER (A) | | 100 | 100 | 100 | 100 | 100 | 100 | 100 |
| - POLYOCTENYLENE (B) | | - | - | 2.5 | 2.5 | 5 | - | 5 |
| - EXTENDER OIL (C) | | - | 10 | - | 10 | 10 | 20 | 20 |

| PROPERTIES | Method | | | | | | | |
|---|---|---|---|---|---|---|---|---|
| . SHORE A HARDNESS | DIN 53505 | 91 | 86 | 90 | 86 | 85 | 82 | 81 |
| . ABRASION (mm³) | DIN 53516 | 90 | 95 | 50 | 50 | 35 | 100 | 55 |

| | | | | | | | | |
|---|---|---|---|---|---|---|---|---|
| * Comparative examples. | | | | | | | | |

**TABLE 2**

| COMPOSITION | | EXAMPLES | | | | | |
|---|---|---|---|---|---|---|---|
| | | 8* | 9 | 10 | 11* | 12 | 13 |
| - LINEAR BLOCK COPOLYMER (A') | | 100 | 100 | 100 | 100 | 100 | 100 |
| - POLYOCTENYLENE (B) | | - | 2.5 | 5 | - | 2.5 | 5 |
| - EXTENDER OIL (C) | | 10 | 10 | 10 | 20 | 20 | 20 |
| - CaCO₃ | | | | | | | |

| PROPERTIES | Method | | | | | | |
|---|---|---|---|---|---|---|---|
| . SHORE A HARDNESS | DIN 53505 | 63 | 64 | 65 | 57 | 58 | 59 |
| . ABRASION (mm³) | DIN 53516 | 61 | 38 | 29 | 65 | 48 | 45 |

| | | | | | | | |
|---|---|---|---|---|---|---|---|
| * Comparative examples. | | | | | | | |

## Claims

1. A thermoplastic composition suitable for forming by both injection and compression molding molded articles having glossy or rubber-like dull surface and very good characteristics of abrasion resistance, comprising:
(A) 100 parts by weight of a vinyl aromatic monomer-conjugated diene linear block elastomeric copolymer alone or in admixture with a vinylaromatic monomer-conjugated diene radial block elastomeric polymer;
(B) from 1 to 50 parts by weight of an alkenyl polymer deriving from monomeric units having from 4 to 16 carbon atoms and having a content in trans bonds higher than 50% with respect to the total of unsaturated bonds;
(C) from 0 to 70 parts by weight of an hydrocarbon extender oil, and
(D) from 0 to 100 parts by weight of a finely subdivided filler.

2. The thermoplastic composition according to claim 1, wherein the vinyl aromatic monomer-conjugated diene linear block copolymer (A) is of the type SBS, wherein S are non-elastomeric polymer blocks of a vinyl aromatic monomer and B are elastomeric polymer blocks based on a conjugated diene.

3. The thermoplastic composition according to claims 1 or 2, wherein the non-elastomeric polymeric blocks S are from 10 to 85% by weight of the block copolymer.

4. The thermoplastic composition according to anyone of the preceding claims, wherein the non-elastomeric polymeric blocks S have a number average molecular weight ranging from 5,000 to 250,000, preferably from about 8,000 to about 75,000 and the elastomeric polymeric blocks B have a number average molecular weight ranging from 2,000 to 350,000, preferably from 5,000 to 250,000.

5. The thermoplastic composition acording to anyone of the preceding claims, wherein the linear block copolymer has the structure polystyrene-polybutadiene-polystyrene.

6. The thermoplastic composition according to anyone of the preceding claims, wherein the linear block copolymer is essentially free from uncoupled blocks, generally known as diblocks or SB, wherein S and B have the meaning reported in the preceding claims.

7. The thermoplastic composition according to anyone of the preceding claims, wherein the amount of radial block copolymer is from 0 to 30 parts by weight per 100 parts by weight of the linear copolymer.

8. The thermoplastic composition according to anyone of the preceding claims, wherein the radial block copolymer is of the type (S-B)ₓ - BS, wherein S and B are polymeric blocks reported in the previous claims and x is an integer higher than 1.

9. The thermoplastic composition according to claim 8, wherein x is an integer comprised between more than 1 and 15, preferably between 2 and 6.

10. The thermoplastic composition according to anyone of the preceding claims, wherein the non-elastomeric polymeric blocks S in the radial block copolymers, range from 8 to 90% by weight of the total weight of the copolymer and have a number average molecular weight comprised between 5,000 and 250,000 and the elastomeric polymeric blocks B have a number average molecular weight comprised between 5,000 and 75,000.

11. The thermoplastic composition according to anyone of the preceding claims, wherein the alkenyl polymer (B) is of the type
-(CR₁R₂)ₘ - C = C - (CR₃R₄)ₙ-
wherein m and n are integers from 1 to 8 and each R₁, R₂, R₃ and R₄, independently from each other, can be hydrogen or an alkyl radical containing from 1 to 3 carbon atoms.

12. The thermoplastic composition according to anyone of the preceding claims, wherein the alkenyl polymer (B) is selected from polyheptylene, polyoctenylene and polynonenylene.

13. The thermoplastic composition according to anyone of the preceding claims, wherein the alkenyl polymer (B) has a content of trans double bonds higher than 50%, preferably at least 60% and more preferably comprised between 75 and 100% with respect to the total of the unsaturated bonds, and a crystallinity higher than 15%, preferably higher than 30% by weight.

14. The thermoplastic composition according to anyone of the preceding claims, wherein the alkenyl polymer (B) is polyoctenylene having a content in trans double bonds of about 78-83%, a crystallinity of about 33%, a Melt Flow Index (M.F.I.) comprised from 5 to 60, determined according to the DIN 53735 at 190°C, with a 5 kg load per 10 min, and a melting point of 53-55°C.

15. The thermoplastic composition according to anyone of the preceding claims, wherein the amount of alkenyl polymer (B) is comprised between 2 and 30 parts by weight with respect to 100 parts by weight of the block copolymer (A).

16. The thermoplastic composition according to anyone of the preceding claims, wherein the hydrocarbon extender oil is a paraffinic and/or naphthenic oil, deriving from the petroleum refining and having less than about 30% by weight of aromatics, measured by clay-gel analysis, and having a viscosity comprised between 100 and 500 SSU at 37.8°C (100° F).

17. The thermoplastic composition according to anyone of the preceding claims, wherein the amount of the extender hydrocarbon oil ranges from 0 to 70, preferably from 5 to 30, parts by weight with respect to 100 parts by weight of the block copolymer (A).

18. The thermoplastic composition according to anyone of the preceding claims, characterized in that it contains from 0 to 100, preferably from 5 to 50, parts by weight with respect to 100 parts by weight of the block copolymer (A), of a filler having particle sizes comprised between 1 and 50 micrometers.

19. The thermoplastic composition according to anyone of the preceding claims, characterized in that it further contains reinforcing agents, flame-proof agents; dyes; pigments; stabilizers; lubricants, flow agents and/or opacizers.

20. Use of the thermoplastic composition according to anyone of the preceding claims for underheels and soles for sports shoes.
